# EUROPEAN PATENT APPLICATION

(11) **EP 2 927 098 A1**
(43) Date of publication of application: **07.10.2015**
(21) Application number: 12889345.0
(22) Date of filing: 29.11.2012
(51) Int. Cl.: B62D 21/16, B60K 15/063, B62D 21/18, B62D 25/22, B66F 9/075

(54) **INTEGRATED FORKLIFT FOOTBOARD/LIQUID-TANK STRUCTURE**

(71) Applicant: Mitsubishi Nichiyu Forklift Co., Ltd., Nagaokakyo-shi Kyoto 617-8585 (JP)
(72) Inventor: ISHIGAMI, Akihiro, Tokyo 108-8215 (JP); HAYAKAWA, Tomoyuki, Tokyo 108-8215 (JP)
(74) Representative: Ter Meer Steinmeister & Partner
(86) International application number: PCT/JP2012/080957
(87) International publication number: WO 2014/083658

(57) **Abstract**

An object is to provide a footboard-integrated liquid tank structure for a forklift in which a liquid tank and a footboard are integrally formed so as to reduce production workload and attachment workload and to reduce cost. A footboard-integrated liquid tank structure includes a first liquid tank member 62, a second liquid tank member 63, and a footboard member 61a. The first liquid tank member 6 includes a first wall surface 62a disposed on an outer part of a side frame 21 so as to extend along a front-rear direction, and extends outward from the front and rear edges of the first wall surface 62a to have a substantially U shape as seen in a planar view. The second liquid tank member 63 includes a fourth wall surface 63a closing an upper opening of the substantially U shape, a fifth wall surface b closing an outer side opening and having a first extending portion 63e extending forward from the second wall surface 62b, and a sixth wall surface 63c closing a lower opening and having a second extending portion 63f extending forward from the second wall surface 62b. The footboard member 61a is horizontally coupled to the second wall surface 62b, a front-wheel fender 21a, and an upper edge of a cutout section S which is adjacent to a cutout above a center in a vertical direction of the first extending portion 63e.

## Description

### TECHNICAL FIELD

The present invention relates to a fuel-tank structure for a forklift.

### BACKGROUND

A forklift is often used to promote work efficiency of transportation, loading, and unloading of various objects. There is employed a method using power from a battery or an internal combustion engine mounted on a forklift as a driving source of the forklift.

In a case where an internal combustion engine is used, a pair of left and right side frames extending in the vehicle front-rear direction is arranged at an interval in the vehicle width direction of the forklift, and a fuel tank for storing fuel for operating the internal combustion engine is disposed outside the side frames.

Generally, for the outer sides of the pair of left and right side frames, a fuel tank is disposed on one side, and a working-oil tank is disposed on the other side. The working oil drives the forklift or operates a load-lifting device.

A footboard unit that allows a driver to access a vehicle is disposed in front of the fuel tank, the working-oil tank, or the like, which are collectively referred to as a liquid tank.

Patent Document 1 discloses a structure in which a footboard is disposed in front of a liquid tank.

According to Patent Document 1, an engine cooling apparatus for a forklift cools an engine by introducing ambient air into an engine compartment covered by side frames and an engine hood. The engine cooling apparatus includes a tank for working oil or fuel, disposed on the outer surface of one of the side frames. A footboard formed as a separate piece from the tank is mounted to a lower part formed on a part of the tank. An inlet for introducing ambient air, communicating to the engine compartment via a cutout formed on the side frame, is formed on a vertical wall surface extending upward from a back end portion of a footboard surface of the footboard.

### Citation List

### Patent Literature

Patent Document 1: Japanese Unexamined Patent Application Pub. No. H9-32550

### SUMMARY

### Technical Problem

However, according to Patent Document 1, the footboard formed as a separate piece from the tank is mounted to the low part formed on a part of the tank for working oil or fuel.

The footboard and the tank for fuel or working oil are formed separately from one another, and produced and mounted to the side frame in different processes. Thus, the workload of production and attachment to the side frame is increased, which results in undesirably high cost.

The present invention was made in view of the above issues. An object is to provide a liquid tank structure integrated with a footboard for a forklift, in which a liquid tank and a footboard are formed as one piece, so as to reduce the workload for production and attachment to cut the cost.

### Solution to Problem

In order to achieve the above object, the present invention provides a footboard-integrated liquid tank structure for a forklift, which is a liquid tank integrally formed with one of a pair of right and left side frames extending in a vehicle front-rear direction of a forklift at an interval in a vehicle width direction. The footboard-integrated liquid tank structure includes a first liquid tank member including a first wall surface disposed on an outer part of the side frame at a center in the vehicle front-rear direction so as to extend along the vehicle front-rear direction, a second wall surface disposed in front of the first wall surface so as to extend from a front edge of the first wall surface toward outside of a vehicle body, and the third wall surface disposed behind the first wall surface so as to extend from a rear edge of the first wall surface toward the outside of the vehicle body. The first liquid tank member is formed to have a substantially U shape with an upper opening, a lower opening, and an outer side opening, as seen in a planar view. The foot-board integrated liquid tank structure further includes a second liquid tank member including a fourth wall surface closing the upper opening, a fifth wall surface closing the outer side opening and having a first extending portion extending toward front of the vehicle body from the second wall surface, and a sixth wall surface closing the lower opening and having a second extending portion extending toward the front of the vehicle body from the second wall surface. The second liquid tank member is formed to have a substantially U shape as seen in the vehicle front-rear direction. The footboard-integrated liquid tank structure further includes a footboard member horizontally coupled to the second wall surface and an upper edge of a cutout section which is adjacent to a cutout above a center in a vertical direction of the first extending portion, and a front-wheel fender of the forklift to which front edges of the footboard member, the cutout section, and the sixth wall surface are each joined.

Accordingly, the two parts each bended to have a U shape are combined to form a liquid tank, and the footboard is integrally disposed on a part of the combined two parts. Thus, it is possible to dispense with production of a separate footboard and attachment of the separate footboard to the vehicle body, which makes it possible to cut the workload.

Further, preferably in the present invention, the first wall surface, the second wall surface, and the third wall surface of the first liquid tank member may be formed of a single bended plate, and the fourth wall surface, the fifth wall surface, and the sixth wall surface of the second liquid tank member may be formed of a single bended plate.

Accordingly, the parts each having a cross section bended to have a U shape are assembled. Thus, it is possible to reduce the ratio of occurrence of fuel leak from welded spots, which makes it possible to improve the quality as well as to cut the cost from reduction of the number of welded spots.

Further, preferably in the present invention, an outer side in the vehicle width direction of the second wall surface may be inclined rearward in the vehicle front-rear direction.

The largest load is applied to the front wheels during operation. Thus, when the forklift is traveling on a rough road, large torsion is generated on the footboard which has a small cross section in the vertical direction. With the second wall surface inclined rearward according to the present invention, the change in the rigidity of the cross section at the inclined part is reduced, which makes it possible to reduce the stress generated by the torsion on the boundary between the liquid tank and the footboard. Thus, it is possible to improve the durability and reliability.

Further, with the second wall surface inclined rearward, the opening of the footboard is enlarged, which improves accessibility of a driver.

### Advantageous Effects

According to the present invention, the liquid tank and the footboard of the forklift are integrally formed, which makes it possible to cut the cost by reducing the production workload and the attachment workload.

### BRIEF DESCRIPTION OF DRAWINGS

FIG. 1 is a schematic perspective view of a forklift according to one embodiment of the present invention.
FIG. 2 is a perspective view of a frame structure of a vehicle body of the present invention.
FIG. 3 is a perspective view of side frames of a forklift according to one embodiment of the present invention.
FIG. 4 is a schematic perspective view of a fuel tank according to the present invention.
FIG. 5 is a schematic view individually illustrating the first liquid tank member of the present invention.
FIG. 6 is a schematic view individually illustrating the second liquid tank member of the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

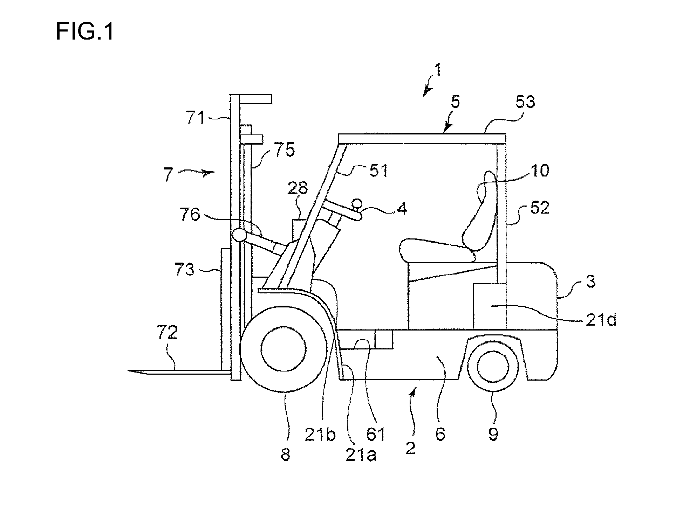

FIG. 1 is a schematic perspective view of a forklift according to one embodiment of the present invention.

A forklift 1 includes a vehicle body 2, a load lifting unit 7 mounted to a front part of the vehicle body 2, a head guard 5 mounted to an upper part of the vehicle body 2, front wheels 8, rear wheels 9 mounted to a rear part of the vehicle body 2, a counterweight 3 mounted to the rear part of the vehicle body 2, a steering wheel 4 for steering the rear wheels 9, and a seat 10 for seating a driver. The head guard 5 is to prevent a load from falling onto a driver's seat upon collapse of loads lifted by the load lifting unit 7. The front wheels 8 are driving wheels for moving the forklift 1. The rear wheels 9 are steering wheels of the forklift 1. The counterweight 3 has a weight such that the rear wheels 9 do not become spaced from the road surface due to the weight of loads on the load lifting unit 7, and such that the rear wheels 9 can contact the road surface firmly.

Since the forklift 1 is steered by the rear wheels 9, the traveling direction of the vehicle body 2 cannot be changed unless the rear wheels 9 are brought into firm contact with the road surface by the counterweight 3.

The load lifting unit 7 includes forks 72 having an L shape as seen from the side, on which loads are to be placed, a back rest 73 to which the forks 72 are attached, a mast 71 for supporting the back rest 73 slidably in the vertical direction, a lift chain (not illustrated) for sliding the back rest 73 in the vertical direction, and a tilt cylinder (hydraulic pressure) 76 for tilting the mast 71 and an assist mast 75 to adjust tips of the forks 72, the tilt cylinder 76 being disposed inside the mast 71.

The tips of the forks 72 are tilted (adjusted) upward and downward to insert the forks 72 under a load, so that the load is placed on the forks 72.

The assist mast 75 is slid by a lift cylinder (hydraulic pressure) that is not illustrated, upward and downward with respect to the mast 71.

As illustrated in FIG. 1, the head guard 5 includes a pair of right and left front pillars 51, 51 disposed at the front of the vehicle body 2 so as to be spaced from each other in the vehicle width direction, a pair of right and left rear pillars 52, 52 disposed at the rear of the vehicle body 2 so as to be spaced from each other in the vehicle width direction, and a rectangular ceiling 53 welded to the upper ends of the four pillars on the four corners.

An attachment structure for the front pillars 51 adjacent to the vehicle body 2 includes a pair of right and left front-attachment brackets 21b standing on the upper surface of a front fender 21a of the vehicle body 2, a pair of right and left gussets 21c disposed on the inner side of the front-attachment brackets 21b with respect to the vehicle so as to maintain the rigidity of the front-attachment brackets 21b in the vehicle width direction, an instrument panel 28 (see FIG. 1) connecting the pair of right and left gussets 21c, and the like. The steering wheel 4, a control lever for driving and lifting loads, and driving meter devices, for instance, are mounted to the instrument panel 28. An instrument reinforcement member for reinforcement is disposed inside the instrument panel 28.

An attachment structure for the rear pillars 52 adjacent to the vehicle body 2 includes a pair of right and left support brackets 21d disposed at the rear of the vehicle of the forklift 1 and on the upper surface of the vehicle body 2 along the outer lateral sides of the vehicle body 2 in the vehicle width direction.

The rear pillars 52 are attached to the support brackets 21d.

The vehicle body 2 includes a pair of right and left side frames 21, a front cross member 25, and a rear cross member 26. The side frames 21 extend in the front-rear direction of the forklift 1 at an interval in the vehicle width direction. The front cross member 25 and the rear cross member 26 connect the pair of right and left side frames 21 in the vehicle width direction, while being spaced from each other in the front-rear direction. The vehicle body 2 also includes an engine, a device for driving the front wheels, a hydraulic pump that generates hydraulic pressure as a power source of hydraulic devices or the like, a device for driving and work such as a steering device for the rear wheels (not illustrated), all of the above being placed between the pair of right and left side frames 21, and an engine cover 27 covering the top of these devices and being attached to the pair of right and left side frames 21 so as to be openable and closable.

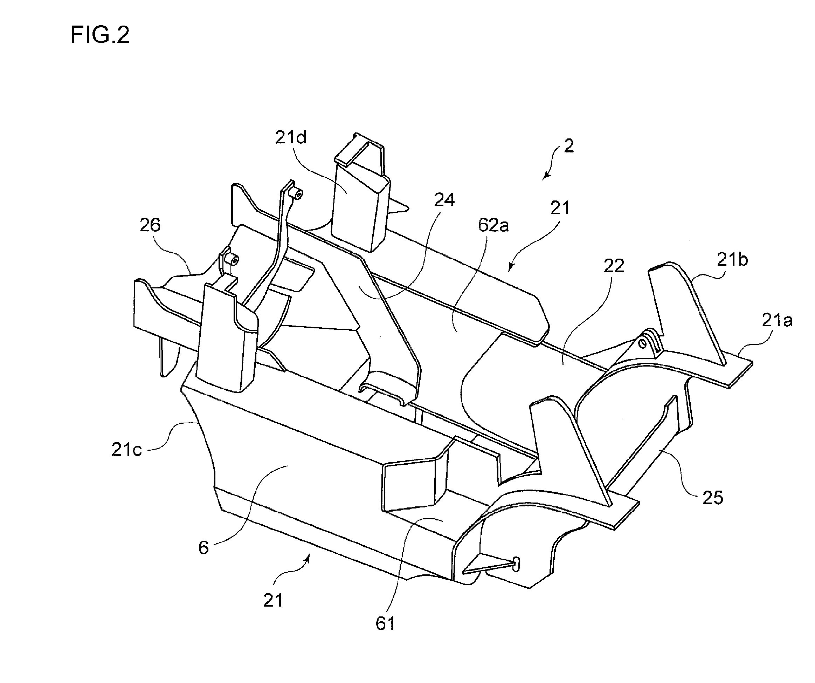

FIG. 2 is a perspective view of a frame structure of the vehicle body.

The vehicle body 2 includes the pair of right and left side frames 21, 21 disposed at an interval in the vehicle width direction, the front cross member 25 connecting the pair of right and left side frames 21, 21 at the front end of the vehicle body 2, and the rear cross member 26 connecting the pair of right and left side frames 21, 21 at the rear end of the vehicle body 2. The above front cross member 25 and rear cross member 26 maintain the interval in the vehicle width direction.

The pair of right and left side frames 21 includes a front frame 22 at the front of the vehicle, a rear frame 26 at the rear of the vehicle, and the first wall surface 62a disposed at the center in the vehicle front-rear direction. The first wall surface 62a connects the front frame 22 and the rear frame 26 integrally and forms an inner wall surface, in the vehicle width direction, of a liquid tank 6 described below.

The load lifting unit 7 is mounted to the front cross member 25, while the counterweight 3 is mounted to the rear cross member 26.

A front fender 21a covering the front wheels 8 is disposed on the front ends of the side frames 21, while a rear fender 21c is disposed on the rear ends of the side frames 21. The rear fender 21c is formed in cooperation with the counterweight 3.

The liquid tank 6 constitutes a part of the side frames 21 and is disposed on the outer side in the vehicle width direction. Also, the liquid tank 6 has strength and rigidity as a constituent member of the side frames 21.

The liquid tank 6 is disposed on either one of the outer sides of the pair of right and left side frames 21. The liquid tank 6 on one side is used as a storage tank for working fuel of an on-board engine, and the liquid tank 6 on the other side is used as a storage tank for working oil of a load lifting unit or a hydraulic device driving the forklift.

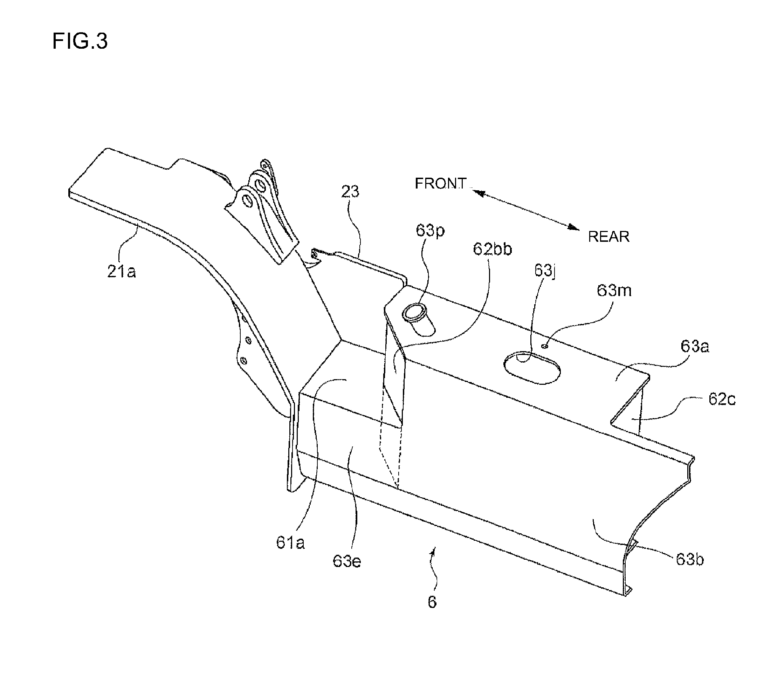

FIG. 3 is a perspective view of the liquid tank 6, the step 61 and the front fender 21a as seen from the lateral rear side of the vehicle.

A footboard 61 is disposed at the front of the liquid tank 6. The footboard 61 has a larger area at the outer side of the vehicle. The front end of the footboard 61 is joined to the front fender 21a at the front of the footboard 61.

The reference sign 63 indicates a fuel supply cylinder, and the reference sign 63j indicates an attachment hole for a measurement device for detecting the residual volume of the stored liquid (fuel). The reference sign 63m indicates an attachment hole for introduction pipe of returning fuel from the engine.

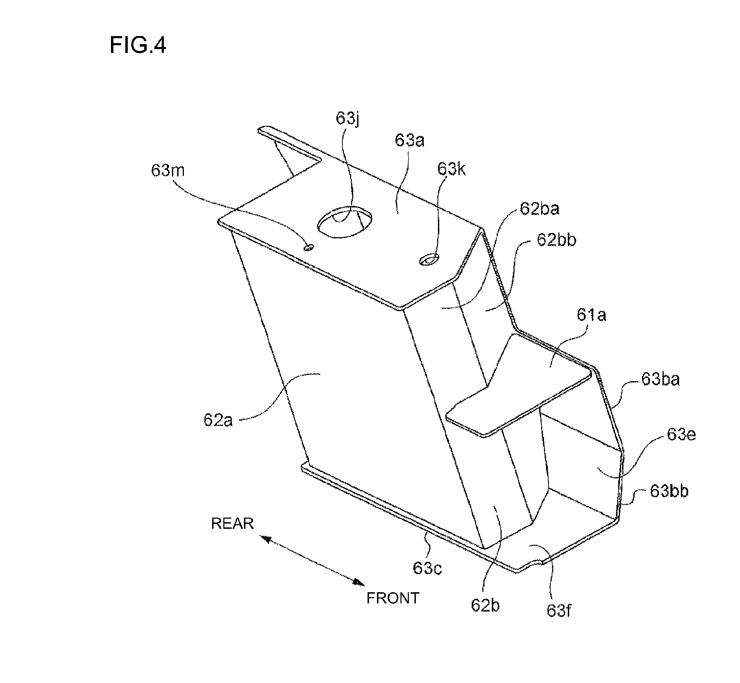

With reference to FIGs. 4, 5, and 6, the structures of the liquid tank 6 and the footboard 61 will be described.

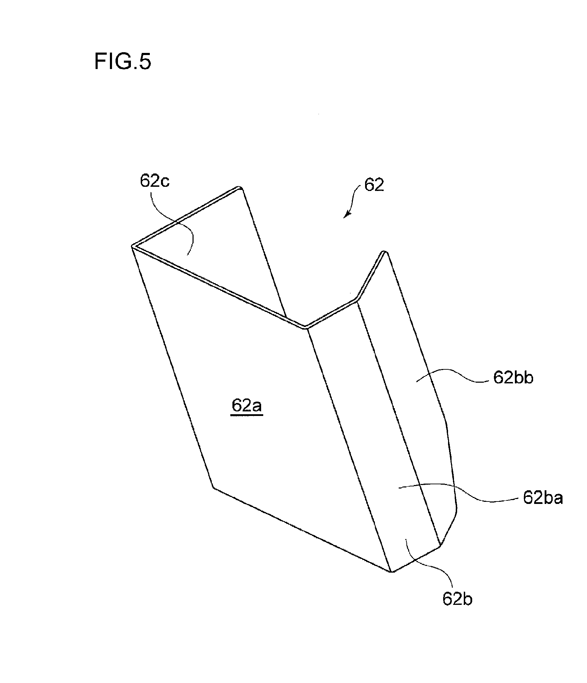

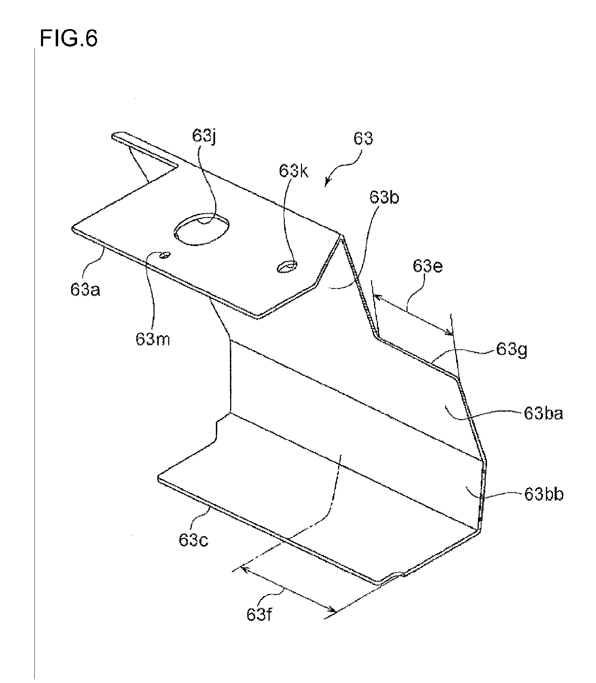

FIG. 4 is a perspective view, as seen from the inside of the vehicle, of a state where the first liquid tank member 62 and the second liquid tank member 63 are assembled. FIG. 5 is a schematic view individually illustrating the first liquid tank member 62. FIG. 6 is a schematic view individually illustrating the second liquid tank member 63.

As illustrated in FIG. 5, the first liquid tank member 62 includes the first wall surface 62a extending along the vehicle front-rear direction in a vertical wall shape, the second wall surface 62b bending from an edge of the first wall surface 62a at the front of the vehicle outwardly in the vehicle width direction in a vertical wall shape, and the third wall surface 62c bending from an edge of the first wall surface 62a at the front of the vehicle outwardly in the vehicle width direction in a vertical wall shape. The third wall surface 62c has a surface facing the second wall surface 62b.

The first liquid tank member 62 is formed of a single strip-shaped plate that is bended to have a substantially U shape in a planar view so as to have openings at the upper side and the lower side of the wall surfaces, and at a part facing the first wall surface 62a.

The second wall surface 62b includes the first bended surface 62ba bended at a substantially right angle from the plane of the first wall surface 62a, and the second bended surface 62bb extending continuously from the first bended surface 62ba and inclining rearward and outward in the vehicle width direction.

Furthermore, the vertical shapes of the outer edges in the vehicle width direction of the second bended surface 62bb and the third wall surface 62c are formed to conform to the vertical inner surface of the fifth wall surface 63b of the second liquid tank member 63 described below.

As illustrated in FIG. 6, the second liquid tank member 63 includes the fourth wall surface 63a of a horizontal surface shape that closes the upper opening of the first liquid tank member 62, the fifth wall surface 63b bended downward and continuously from the fourth wall surface 63a that closes the opening facing the first wall surface 62a of the first liquid tank member 62, and the sixth wall surface 63c of a horizontal surface shape that closes the lower opening of the first liquid tank member 62.

The fifth wall surface 63b forms a part of the outer side of the vehicle body 2. The fifth wall surface 63b includes a perpendicular wall portion 63ba that extends continuously from the fourth wall surface 63a and is bended substantially perpendicular and downward, and an inclined wall portion 63bb that extends continuously from the perpendicular wall portion 63ba and is inclined inwardly in the vehicle width direction.

The second liquid tank member 63 is formed of a single strip-shaped plate that is bended to have a substantially U shape as seen in the vehicle front-rear direction, so as to have openings at the inner side in the vehicle width direction and in the vehicle front-rear direction.

Here, the upper surface of the fourth wall surface 63a includes an oil supply cylinder hole 63k for attaching the liquid oil supply cylinder (fuel), an attachment hole 63j for attaching a residual volume meter for detecting the residual volume of the residual liquid (fuel), and a return pipe attachment hole 63m for introducing return fuel from the engine.

As illustrated in FIG. 4, the wall surfaces of the first liquid tank member 62 and the second liquid tank member 63 are assembled to have a structure such that the openings of one member are closed by the other member mutually. The assembled portions are joined by welding to form a sealed hexahedron structure.

With the above structure, in which members bended to have a U-shaped cross section are assembled, it is possible to reduce welded spots to reduce the risk of fuel leak from the welded spots. As a result, it is possible to improve the quality and to cut the cost.

Further, the fifth wall surface 63b includes the first extending portion 63e extending to the front in the vehicle front-rear direction from the second wall surface 62b. The sixth wall surface 63c includes the second extending portion 63f extending to the front in the vehicle front-rear direction from the second wall surface 62b.

Here, the first extending portion 63e includes a cutout section S of a rectangular shape. The middle portion in the vertical direction of the perpendicular wall portion 63ba is an upper edge 63g of the cutout section S.

The first extending portion 63e and the second extending portion 63f are fixed (by welding) to the front fender 21 a.

A footboard plate 61a is a footboard member of the footboard 61. The footboard plate 61a has a shape such that an outer edge in the vehicle width direction extends along the upper edge 63g of the first extending portion 63e, a rear side in the vehicle front-rear direction extends along the horizontal cross section of the second wall surface 62b, a front side extends along the front fender 21a, and an inner side in the vehicle width direction extends along the outer surface of the center frame 23. The four sides are each welded thereon.

In this way, the footboard 61 is formed to have a closed cross-sectional structure sealed at six sides, including the footboard plate 61a, the first extending portion 63e, the second extending portion 63f, the center frame 23, the second wall surface 62b and the front fender 21a.

Further, since the horizontal cross section of the second wall surface 62b is inclined outward and rearward, the outer side is enlarged, which improves the accessibility of a driver to the forklift 1.

With the above configuration, the side frames 21 have a structure in which the liquid tanks are integrally formed on the outer surface of the side frames 21. Thus, the cross section in the vehicle width direction has a substantially rectangular closed cross-sectional shape, which makes it possible to maintain high rigidity against a vertical load, a torsion load, or the like generated when the forklift 1 travels on a rough road.

Two components bended in a U shape are assembled together to form a liquid tank, and a footboard is integrally formed on a part of the liquid tank. In this way, it is possible to skip the step of attaching a separate footboard, and to reduce the workload.

Further, since the footboard 61 has a shorter height than other parts of the side frames 21, there is a high risk of the rigidity of the footboard 61 being reduced as compared to the other parts, thereby causing high stress.

In view of this, with the second wall surface 62b having a horizontal cross section inclined outward and rearward from the center part in the vehicle width direction, the change in the rigidity of the cross section of the inclined part is reduced, which makes it possible to reduce the stress caused by torsion on the boundary between the liquid tank and the footboard, and thus to improve the resistance reliability.

Thus, the liquid is stored in a part having high rigidity behind the second wall surface 62b so as not be stored within the footboard 61. In this way, possible liquid leakage is prevented.

### Industrial Applicability

The present invention can be provided as a liquid storage tank structure for a forklift.

### Reference Signs List

- 1: Forklift
- 2: Vehicle body
- 5: Head guard
- 6: Liquid tank
- 7: Load lifting unit
- 21: Vehicle frame
- 21a: Front fender
- 21b: Front attachment bracket
- 21d: Rear attachment bracket
- 22: Front frame
- 26: Rear frame
- 51: Front pillar
- 52: Rear pillar
- 61: Footboard
- 61a: Footboard plate (footboard member)
- 62: First liquid tank member
- 62a: First wall surface
- 62b: Second wall surface
- 62c: Third wall surface
- 63: Second liquid tank member
- 63a: Fourth wall surface
- 63b: Fifth wall surface
- 63c: Sixth wall surface
- 63e: First extending portion
- 63f: Second extending portion

## Claims

1. A footboard-integrated liquid tank structure for a forklift, which is a liquid tank integrally formed with one of a pair of right and left side frames extending in a vehicle front-rear direction of a forklift at an interval in a vehicle width direction, the footboard-integrated liquid tank structure comprising:
a first liquid tank member including a first wall surface disposed on an outer part of the side frame at a center in the vehicle front-rear direction so as to extend along the vehicle front-rear direction, a second wall surface disposed in front of the first wall surface so as to extend from a front edge of the first wall surface toward outside of a vehicle body, and the third wall surface disposed behind the first wall surface so as to extend from a rear edge of the first wall surface toward the outside of the vehicle body, the first liquid tank member being formed to have a substantially U shape having an upper opening, a lower opening, and an outer side opening, as seen in a planar view;
a second liquid tank member including a fourth wall surface closing the upper opening, a fifth wall surface closing the outer side opening and having a first extending portion extending toward front of the vehicle body from the second wall surface, and a sixth wall surface closing the lower opening and having a second extending portion extending toward the front of the vehicle body from the second wall surface, the second liquid tank member being formed to have a substantially U shape as seen in the vehicle front-rear direction;
a footboard member horizontally coupled to the second wall surface and an upper edge of a cutout section which is adjacent to a cutout above a center in a vertical direction of the first extending portion; and
a front-wheel fender of the forklift to which front edges of the footboard member, the cutout section, and the sixth wall surface are each joined.

2. The footboard-integrated liquid tank structure for a forklift according to claim 1,
wherein the first wall surface, the second wall surface, and the third wall surface of the first liquid tank member are formed of a single bended plate, and the fourth wall surface, the fifth wall surface, and the sixth wall surface of the second liquid tank member are formed of a single bended plate.

3. The footboard-integrated liquid tank structure for a forklift according to claim 1 or 2,
wherein an outer side in the vehicle width direction of the second wall surface is inclined rearward in the vehicle front-rear direction.

## Amended claims

### Amended claims under Art. 19.1 PCT

**1.** A footboard-integrated liquid tank structure for a forklift, which is a liquid tank integrally formed with one of a pair of right and left side frames extending in a vehicle front-rear direction of a forklift at an interval in a vehicle width direction, the footboard-integrated liquid tank structure comprising:
a first liquid tank member including a first wall surface disposed on an outer part of the side frame at a center in the vehicle front-rear direction so as to extend along the vehicle front-rear direction, a second wall surface disposed in front of the first wall surface so as to extend from a front edge of the first wall surface toward outside of a vehicle body, and the third wall surface disposed behind the first wall surface so as to extend from a rear edge of the first wall surface toward the outside of the vehicle body, the first liquid tank member being formed to have a substantially U shape having an upper opening, a lower opening, and an outer side opening, as seen in a planar view;
a second liquid tank member including a fourth wall surface closing the upper opening, a fifth wall surface closing the outer side opening and having a first extending portion extending toward front of the vehicle body from the second wall surface, and a sixth wall surface closing the lower opening and having a second extending portion extending toward the front of the vehicle body from the second wall surface, the second liquid tank member being formed to have a substantially U shape as seen in the vehicle front-rear direction; and
a footboard member horizontally coupled to the second wall surface and an upper edge of a cutout section which is adjacent to a cutout above a center in a vertical direction of the first extending portion;
a front-wheel fender of the forklift to which front edges of the footboard member, the cutout section, and the sixth wall surface are each joined,
wherein a liquid storage is formed behind the second wall surface of the first liquid tank member.

**2.** The footboard-integrated liquid tank structure for a forklift according to claim 1,
wherein the first wall surface, the second wall surface, and the third wall surface of the first liquid tank member are formed of a single bended plate, and the fourth wall surface, the fifth wall surface, and the sixth wall surface of the second liquid tank member are formed of a single bended plate.

**3.** The footboard-integrated liquid tank structure for a forklift according to claim 1 or 2,
wherein an outer side in the vehicle width direction of the second wall surface is inclined rearward in the vehicle front-rear direction.
